(19) Europäisches Patentamt
European Patent Office
Office européen des brevets

(11) **EP 4 621 616 A1**

(12) **EUROPEAN PATENT APPLICATION**

(43) Date of publication:
**24.09.2025 Bulletin 2025/39**

(21) Application number: **24164733.8**

(22) Date of filing: **20.03.2024**

(51) International Patent Classification (IPC):
**G06F 21/55** (2013.01)    **G06F 21/64** (2013.01)
**G06Q 20/38** (2012.01)

(52) Cooperative Patent Classification (CPC):
**G06F 21/552; G06F 21/645; H04L 9/0637;
H04L 9/0643; H04L 9/12; H04L 9/3297; H04L 9/50**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Mastercard International Incorporated
Purchase NY 10577 (US)**
(72) Inventors:
• **GULLEDGE, Heather**
  **Wentzville, 63385 (US)**
• **ROBERT, Gilles**
  **1300 Wavre (BE)**

(74) Representative: **Murgitroyd & Company
165-169 Scotland Street
Glasgow G5 8PL (GB)**

(54) **METHOD, SYSTEM AND COMPUTER-READABLE MEDIUM FOR SCALABLE AND DISTRIBUTED LOG AUTHENTICATION**

(57) The present disclosure relates to a computer-implemented method for distributed log authentication wherein logs are distributed to respective ones of a plurality of processing entities which then hash the received logs with entity-specific chain identification numbers and record sequence numbers before conveying the results to an audit database for verification.

FIG. 1

**Description**

FIELD

The present disclosure relates to a computer-implemented method, a system, and a computer-readable medium for processing and authenticating log data.

BACKGROUND

Log data recording is widely employed in the modern era and the provision of certainty that log data has not been interfered with by bad actors is of significant importance to parties seeking to use or rely upon the log data.
As one example, the PCI (Payment Card Industry) Point to Point Encryption (PP2E) Data Security Standards (DSS) have stringent requirements for audit logging that require:

1. processes and mechanisms for logging and monitoring all access to system components and cardholder data are defined and documented;
2. audit logs to be implemented to support the detection of anomalies and suspicious activity, and the forensic analysis of events;
3. audit logs to be protected from destruction and unauthorized modifications;
4. audit logs to be reviewed to identify anomalies or suspicious activity;
5. audit log history to be retained and available for analysis;
6. time-synchronization mechanisms to support consistent time settings across all systems;
7. failures of critical security control systems to be detected, reported, and responded to promptly.

Considering #3 and in particular protection from unauthorized modification: for audit logging, bad actors could seek to cover their tracks by deleting log records that would show forensic auditors the evidence of unauthorized activity. To prevent such deletions going unnoticed, one must be able to detect if an audit log record has been modified, added to, or deleted. One approach is to secure an audit log is Cipher Block Chaining Message Authentication Code (CBC-MAC). CBC-MAC is a MAC algorithm based on the Cipher Block Chaining (CBC) mode of a block cipher. In CBC, the previous ciphertext is XORed to the plaintext block before the block cipher is applied. The MAC value is derived from the last ciphertext block.
This provides a mechanism to validate that an entire log file contains all the records and that those records have not been tampered with. The inventors have perceived that a downside of such an approach is that it depends on looking up the contents of the last log message to create the MAC of the next log message. This does not scale well, and it does not work well over wide area networks. To make it faster, the last log message can be kept in memory of the logging process, but this forces all log messages to go through the same process. Logging can be a high-volume process flow exceeding thousands of messages per second for busy systems. PP2E compliant logging solutions can thus become a bottleneck.

SUMMARY

This summary introduces concepts that are described in more detail in the detailed description. It should not be used to identify essential features of the claimed subject matter, nor to limit the scope of the claimed subject matter.
According to a first aspect, there is provided a computer-implemented method comprising, at a first processing entity: receiving first metadata including first log data; a) hashing the first metadata, a first record sequence number and a first chain identification number associated with the first processing entity to produce a first hash value; b) sending, to an audit database, a first hashed metadata entry comprising: the first metadata, the first record sequence number, the first chain identification number and the first hash value; c) incrementing or decrementing the first record sequence number; and performing steps a)-c) for subsequent first metadata subsequently received at the first processing entity and associated with respective subsequent first log data.
The hashing may be performed using a first hash key associated with the first processing entity.
The method may further include, at a second processing entity: e) receiving second metadata including second log data; f) hashing the second metadata, a second record sequence number and a second chain identification number associated with the second processing entity to produce a second hash value; g) sending, to the audit database, a second hashed metadata entry comprising: the second metadata, the second record sequence number, the second chain identification number and the second hash value; h) incrementing or decrementing the second record sequence number; and performing steps e)-g) for subsequent second metadata subsequently received at the second processing entity and associated with a respective subsequent second log data.
According to a further aspect, there is provided computer-implemented method comprising: receiving, from each of a plurality of processing entities, a series of hashed metadata entries, each hashed metadata entry comprising: metadata comprising log data, a record sequence number associated with that metadata and the respective processing entity, a chain identification number for the respective processing entity, and a hash value associated with the respective: metadata, record sequence number, and chain identification number; and storing the hashed metadata entries in an audit database.

The log data of the preceding aspects may be defined by a user of the audit process and/or may comprise one or both of: a log file; and a log file identifier and a location code for a log file identified by the log file identifier.

For each hashed metadata entry received from one of the plurality of processing entities, the method may further comprise: hashing that hashed metadata entry's: metadata, record sequence number, and chain identification number to produce a verification hash value; and if the verification hash value is the same as that hashed metadata's hash value, determining that that hashed metadata entry should not be repudiated.

Hashing, for each hashed metadata entry received from one of the plurality of processing entities, the hashed metadata entry's metadata, record sequence number, and chain identification number to produce a verification hash value may comprise performing a hash operation using a hash key associated with the respective processing entity.

The method may further comprise, for each series of hashed metadata entries received from one of the plurality of processing entities, determining that that series of hashed metadata entries is complete. That may be done by: determining from the record sequence numbers of the hashed metadata of that series that each of those record sequence numbers spans an expected range of record sequence number values, and determining that, when the record sequence numbers of the hashed metadata of that series are sequentially ordered, the increment or decrement between each pair of adjacent record sequence numbers is the same as an expected increment or decrement.

A unified and non-repudiated log may be created by joining together at least the log data of all of the hashed metadata entries.

The plurality of processing entities may comprise the first processing entity of the above first aspect with the series of hashed metadata entries received from the first processing entity being sent at step c) and the plurality of processing entities may comprise the second processing entity with the series of hashed metadata entries received from the second processing entity being sent at step g)

According to a further aspect, there is provided a computer system comprising one or more processors arranged to: a) receive first metadata including first log data; b) hash the first metadata, a first record sequence number and a first chain identification number associated with the first processing entity to produce a first hash value; c) send, to an audit database, a first hashed metadata entry comprising: the first metadata, the first record sequence number, the first chain identification number and the first hash value; d) increment or decrement the first record sequence number; and perform steps a)-c) for subsequent first metadata subsequently received at the first processing entity and associated with respective subsequent first log data.

According to a further aspect, there is provided a computer system comprising one or more processors arranged to: receive, from each of a plurality of processing entities, a series of hashed metadata entries, each hashed metadata entry comprising: metadata comprising log data, a record sequence number associated with that metadata and the respective processing entity, a chain identification number for the respective processing entity, and a hash value associated with the respective: metadata, record sequence number, and chain identification number; and store the hashed metadata entries in an audit database.

According to a further aspect, there is provided a computer-readable medium storing instructions that, when executed by one or more processors of one or more computing devices, cause the one or more computing devices to perform any of the methods described above.

BRIEF DESCRIPTION OF FIGURES

Specific embodiments are described below by way of example only and with reference to the accompanying drawings, in which:

Figure 1 shows a schematic of a process for providing hashed log data from a plurality of processing entities to an audit database;

Figure 2 shows a schematic diagram of a process for providing hashed log data from a processing entity to an audit database;

Figure 3 shows a flowchart of a process for providing hashed log data from a processing entity to an audit database;

Figure 4 shows a database schema for storing audit log records that have been processed according to the methods described herein;

Figure 5 shows a flowchart of a process for receiving hashed log data from a plurality of processing entities at an audit database; and

Figure 6 shows a schematic diagram of a computing device configured to implement the methods of the present disclosure.

DETAILED DESCRIPTION

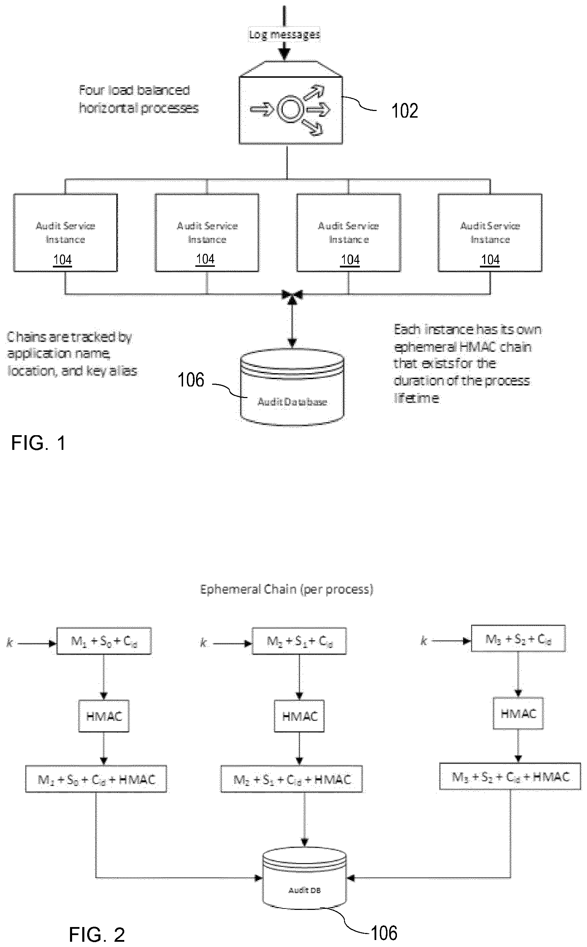

Figure 1 shows a schematic of a process for providing hashed log data from a plurality of processing entities to an audit database. Instead of having a bottleneck caused by using the preceding log message when performing authentication of a subsequent log message, the approach of Figure 1 employs a load balancer 102 which, for a particular audit process, directs incoming metadata pertaining to a series of log messages for authentication at different ones of a plurality of different processing entities 104 (audit service instances). The load balancer 102 may direct the metadata based, for example, on one or more of a history of to where the load balancer 102 has previously directed metadata, knowledge about the processing capabilities and/or availabilities of the various processing entities 104, and feedback information from respective processing entities.

Examples of what may be logged include any valuable digital information and anything that a bad player may be interested in changing. Non-limiting examples include data about: file access, logins, bank transactions, the issuance of identity documents, the issuance of credit cards and the issuance of security clearances - for individuals and/or corporate entities. Non-limiting examples of logs include: 'user a deleted file b' or 'user c added certificate d'.

In the example of Figure 1, an arrangement of four horizontal (parallel) processing entities 104 are shown, but any plural number could be used. At each processing entity 104 a Hash Message Authentication Code (HMAC) is produced for each incoming metadata and the HMAC is conveyed to an audit database 106 along with the metadata and other information used to create the HMAC. As will be explained in more detail with reference to Figure 2, each processing entity 104 will over time receive from the load balancer 102 a series of metadata to be HMAC'd and that processing entity 104 chains together the metadata that it processes by employing in the HMAC operation a processing entity specific identifier (a chain identification (ID) number which may be a Universal Unique Identifier (UUID)) as well as a record sequence number that is changed for each metadata and each instance of which is, for that processing entity (104), unique. Each processing entity 104 would be implemented upon one or more: computer-implemented devices including containers, virtual machines, processors, nodes and/or servers and may be implemented independently or as part of a cloud environment so a given processing entity 104 may be extant/spun up only for the duration of a particular audit process. Similarly, the HMAC chain produced by a given processing entity 104 shall be ephemeral at that processing entity and existing only for the duration of that processing entity Thereat and thereafter the chain identity number and latest record sequence number along with any information that may optionally be used to track the chain - such as an application name and key alias - may no longer be stored at the processing entity 104. Accordingly, and as examples only, an HMAC chain could last five weeks or five minutes. The processing entities 104 may be located a geographically distant locations (such as in different countries) and may run different technology stacks. Accordingly, they do not need to run the same operating systems or applications and/or may communicate with the load balancer 102 and/or audit database (106) using different communication protocols.

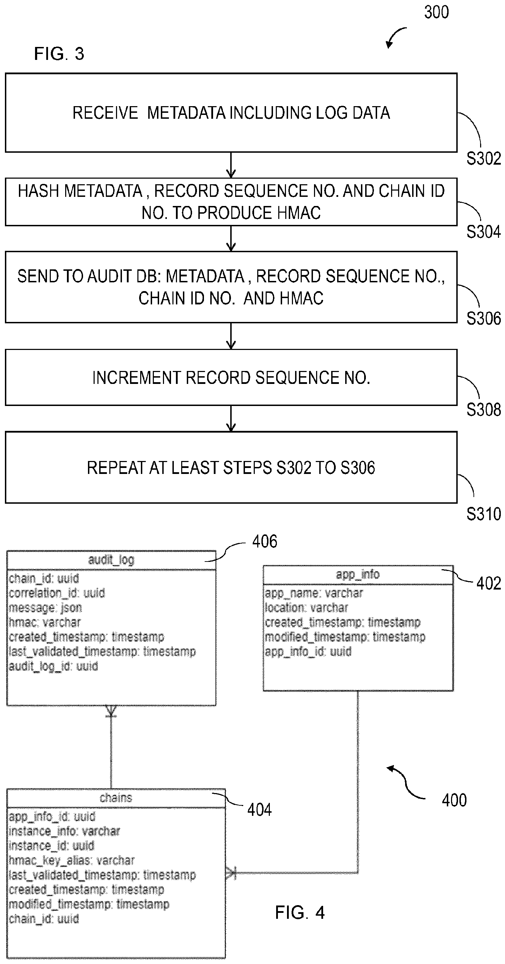

The audit database 106, which may be a relational database, stores received metadata and HMAC information along with other information used to create the HMAC, for example as is described below in relation to Figure 3. Subsequent operations may be performed on data stored by the audit database 106 such as during forensic analysis of the audit logs, examples of such operations include: i) performing an HMAC operation on an individual entry in the audit database 106 to verify that entry; ii) performing verification operations for each entry in the audit database 106 that relates to a particular chain and further verifying that each expected entry in that chain is present; and iii) performing an end-to-end verification of an entire process whereby operation ii) is performed for each chain of the audit process.

Figure 2 shows a schematic diagram of a process performed at a processing entity 104 for providing hashed log data to an audit database 106. In particular, Figure 2 shows the process of chaining together three sequentially received metadata $M_1$, $M_2$ and $M_3$ at a processing entity 104. As shown by the features joined to the leftmost arrow that feeds into audit database 106, at a first time point metadata $M_1$ is received at the processing entity 104. Metadata $M_1$ (and subsequently received metadata) contains log data which may be embodied as a log file or a log file identifier and a location code for a log file identified by the log file identifier - which can significantly reduce communication bandwidth and storage requirements. A hash operation is performed using a key on a combination of: the metadata $M_1$, a processing entity specific chain identifier (C), and a record sequence number (So) which is unique to that chain to produce a hash value (HMAC). The key may be a symmetric key and/or may specific to (associated with) the processing entity in question or may be specific to the current audit process. It may be accessed via a key alias. The processing entity then sends $M_1$, $S_0$, C and that HMAC to the audit database 106 and increments the record sequence number by one to produce $S_1$. As other possibilities, the record sequence number could instead be incremented in another manner - for example by a multiple of one - and or could be decremented.

As shown by the features joined to the middle arrow that feeds into audit database 106, at a second time point metadata $M_2$ is received at the processing entity. Metadata $M_2$ is hashed (HMAC'd) with C and $S_1$ and $M_2$, $S_1$, and C along with the resultant hash value (HMAC) are sent to the audit database 106 and $S_1$ is incremented (or decremented if such an approach is being used) to produce $S_2$.

Similarly, and as shown by the features joined to the rightmost arrow that feeds into audit database 106, at a third time point metadata $M_3$ is received at the processing entity. Metadata $M_3$ is hashed (HMAC'd) with C and $S_2$ and then $M_3$, $S_2$, and C along with the resultant hash valve (HMAC) are sent to the audit database 106 and $S_2$ is incremented (or decremented if such an approach is being used) in preparation for subsequently received metadata.

Figure 3 shows a flowchart of a process 300 for providing hashed log data from a processing entity 104 to an audit database 106. At step S302, metadata including first log data is received at the processing entity 104. At step S304 the received metadata, a record sequence number and a chain identification number associated with the first processing entity are hashed to produce a first hash value. At step S306, the processing entity 104 sends, to the audit database 106, a hashed metadata entry comprising: the metadata, the record sequence number, the chain identification number and the hash value. At step S308, the record sequence number is (in this example) incremented before, via step S310, at least steps S302 to S306 are repeated. Repetition need not only occur for two metadata and may occur for as many metadata as are provided to the processing entity (104) - in which case step S308 is also repeated with every repeat of steps S302 to S306 (with the possible exception of the last repeat). As shown in figure 1, multiple different processing entities 104 may be performing the method of figure 3 in parallel and in relation to metadata directed respectively to them by the load balancer 102 and by using their respective chain identification numbers and record sequence number variable.

Figure 4 shows an example database schema 400 that could be used for storing audit log records that have been processed. An app_info table 402 is used to register client applications for logging. A chains table 404 contains chain information: a chain exists for a given client application for the time the audit service is UP. It could be 1 minute, 1 week, 1 month, etc. The app_info_id is the ID of the application to which the chain belongs. The instance_id is a random generated UUID. The hmac_key_alias is the reference to the private key used and stored by a Hardware Security Module (HSM) to compute the HMAC of the audit logs and verify their integrity. The last_validated_timestamp provides time information for the most recent time that the integrity process verified the integrity of the chain. The created_timestamp is filled in at record creation time. The audit_log table (406) contains the logs produced by the client applications. Each audit log belongs to a chain. The chain_id references the chain to which this audit log belongs. The correlation_id is a unique ID produced by the client application to track the flow of audit logs. The message is the audit log itself + the sequence in the chain. The hmac is computed by the HSM and is based on the message.

The last_validated_timestamp provides time information for the most recent time that the integrity process verified the integrity of the audit log. The created_timestamp is filled in at record creation time. The exact naming of the database base columns and associated metadata may of course vary and not all entries may be used - as one example, the created and modified timestamps on the chains table could be omitted.

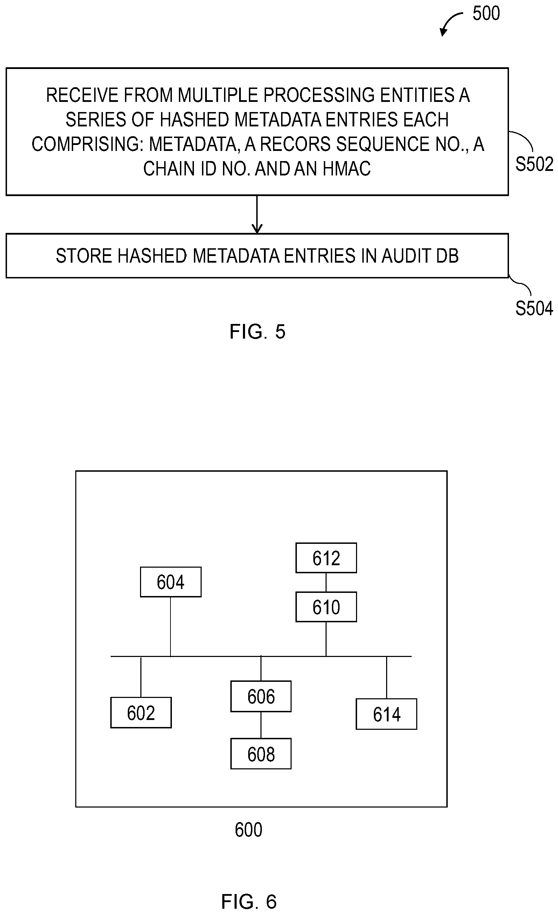

Figure 5 shows a flowchart of a process 500 for receiving hashed log data from a plurality of processing entities at an audit database 106. At step S502, the audit database 106 receives, from each of a plurality of processing entities 104, a series of hashed metadata entries, each hashed metadata entry comprising: metadata comprising log data, a record sequence number associated with that metadata and the respective processing entity, a chain identification number for the respective processing entity, and a hash value associated with the respective: metadata, record sequence number, and chain identification number. At step S504, the received hashed metadata entries in are stored in the audit database 106.

Once hashed metadata has been stored at the audit database 106, verification of the data may be performed. That may be performed at the audit database 106 - which may comprise processing functionality - or it may be performed by one or more external computers/processors.

As one verification, an individual hashed metadata entry may be verified by hashing that hashed metadata entry's: metadata, record sequence number, and chain identification number to produce a verification hash value. If the verification hash value is not the same as the hashed metadata's hash value, then that hashed metadata entry cannot be validated and may be repudiated, deleted, and/or or flagged for further inspection. If the verification hash value is the same as the hashed metadata's hash value, then a determination that that hashed metadata entry should not be repudiated can be made. When performing verification of such an individual hashed metadata entry, a hash key should be used for the verification hashing that corresponds to that used to create the hashed metadata's hash value and that hash key may be stored at the audit database 106 or retrieved from elsewhere - for example by way of a key alias.

As another verification, each individual hashed metadata entry may be verified - for example as described above - before a verification of the entire chain produced by the respective processing entity 104 is performed. When performing an entire chain verification, multiple checks can be made:

i) A determination can be made that the record sequence numbers of the hashed metadata received from the processing entity in question span an expected range of record sequence number values. For example, if it is know that the sequence started at 0 and that there were 256 records in that chain and an increment value of 1 was employed, then the expected range of record sequence number values would be from 0 to 255 and if there was no value 0 or 255 then the expected range would not be spanned. Of course, other start and end points and increment/decrement approaches would result in different expected ranges of record sequence number values.

ii) A determination can be made that there are no unexpected gaps in the record sequence numbers. As an example, if an increment value of 1 was being used and, when sequentially ordered, a sequence went: 0, 1, 2, and 4, it would indicate a gap due to the absence of a number 3. As a further example, if a sequence was know to have started at zero, but when ordered went: 1, 2, 3 would indicate a gap due to the absence of a 0. One way of looking for gaps is to determine, when the record sequence numbers of the hashed metadata from a processing entity 104 are sequentially ordered, whether the increment or decrement between each pair of adjacent record sequence numbers is the same as an expected increment or decrement.

iii) A determination can be made that a given start value is present and that a given number of entries each separated by a given increment or decrement are present.

Different use cases can occur in relation to the final record of a chain. If a chain is still alive, which is to say that it has not been closed and so the load balancer 102 may yet send more metadata to the respective processing entity 104 for HMACing, or in the case of an abnormal termination of the audit process, then a comparison can be performed between the final (when ordered sequentially) record sequence number in the chain and an expected final record sequence number - based for example on an immediately previously received record sequence number for that chain. As another possibility, when a processing entity (104) is about to cease processing metadata - for example consequent to an application shutdown - a 'closing' audit record number may be recorded.

When individual chains have been verified to be complete, a check can be made to see whether hashed metadata has been received from all processing entities 104 that were expected to provide hashed metadata (a check that all chains have been received). Knowledge of which processing entities 104 were expected to provide hashed metadata may be provided at setup or otherwise - for example based on communication from the load balancer 102.

Additionally or alternatively, subsequent to verification that all individual chains are complete, the log data of all of the hashed metadata may be joined together to produce a unified and non-repudiated log. Such joining may be by way of data concatenation, tagging, the use of pointers or otherwise. This is based on the Commutative Law in mathematics. In essence:

$$\text{ValidatedChain1} + \text{ValidatedChain2} + \text{ValidatedChain3} = \text{ValidatedChainCombined}$$

Beneficially, the above approaches can provide an end-to-end audit log which can be verified to be both complete and without any modification - including by way of insertion of false logs or deletion of true logs. Furthermore, by having a chain per processing entity, the approaches can easily be horizontally scaled. This increases resiliency, maintainability (rolling updates), supports Wide Area Network (WAN) distributed logging (wherein multiple processing entities may be distributed across such a network) and reduces processing bottlenecks. For example, logging may simultaneously occur across geographically distant locations - such as in the US and Europe. The process can also facilitate forensic analysis in situations where verification fails - for example by enabling identification of the processing entity where the issue arose (and optionally also the time that it did so).

Figure 6 is a schematic and simplified representation of a computer apparatus 600 which can be used to perform the methods described herein, either alone, in combination with other computer apparatuses or as part of a "cloud" computing arrangement. In particular, the computer apparatus 600 may be configured to perform the steps of the methods 300 and/or 500 described above.

The computer apparatus 600 comprises various data processing resources such as a processor 602 (in particular a hardware processor) coupled to a central bus structure. Also connected to the bus structure are further data processing resources such as memory 604. A display adapter 606 connects a display device 608 to the bus structure. One or more user-input device adapters 610 connect a user-input device 612, such as a keyboard and/or a mouse to the bus structure. One or more communications adapters 614 are also connected to the bus structure to provide connections to other computer systems 600 and other networks.

In operation, the processor 602 of computer system 600 executes a computer program comprising computer-executable instructions that may be stored in memory 604. When executed, the computer-executable instructions may cause the computer system 600 to perform one or more of the methods described herein, such as any of the methods 300 and/or 500 described above. The results of the processing performed may be displayed to a user via the display adapter 606 and display device 608. User inputs for controlling the operation of the computer system 600 may be received via the user-input device adapters 610 from the user-input devices 612.

It will be apparent that some features of computer system 600 shown in Figure 6 may be absent in certain cases. For example, one or more of the plurality of computer apparatuses 600 may have no need for display adapter 606 or display device 608. This may be the case, for example, for particular server-side computer apparatuses 600 which are used only for their processing capabilities and do not need to display information to users. Similarly, user input device adapter 610 and user input device 612 may not be required. In its simplest form, computer apparatus 600 comprises processor 602 and memory 604. In addition, it will be appreciated that the methods may be implemented by multiple computing apparatuses 600 (e.g. in a distributed computing environment).

The described methods may be implemented using computer executable instructions. A computer program product or computer readable medium may comprise or store the computer executable instructions. The computer program product or computer readable medium may comprise a hard disk drive, a flash memory, a read-only memory (ROM), a CD, a DVD, a cache, a random-access memory (RAM) and/or any other storage media in which information is stored for any duration (e.g., for extended time periods, permanently, brief instances, for temporarily buffering, and/or for caching of the information). A computer program may comprise the computer executable instructions. The computer readable medium may be a tangible or non-transitory computer readable medium. The term "computer readable" encompasses "machine readable".

There is described herein a computer-implemented method for distributed log authentication wherein logs are distributed to respective ones of a plurality of processing entities which then hash the received logs with entity-specific chain identification numbers and record sequence numbers before conveying the results to an audit database for verification.

The singular terms "a" and "an" should not be taken to mean "one and only one". Rather, they should be taken to mean "at least one" or "one or more" unless stated otherwise. The word "comprising" and its derivatives including "comprises" and "comprise" include each of the stated features, but does not exclude the inclusion of one or more further features.

The above implementations have been described by way of example only, and the described implementations are to be considered in all respects only as illustrative and not restrictive. It will be appreciated that variations of the described implementations may be made without departing from the scope of the invention. It will also be apparent that there are many variations that have not been described, but that fall within the scope of the appended claims.

**Claims**

1. A computer-implemented method comprising, at a first processing entity:

   a) receiving first metadata including first log data;
   b) hashing the first metadata, a first record sequence number and a first chain identification number associated with the first processing entity to produce a first hash value;
   c) sending, to an audit database, a first hashed metadata entry comprising: the first metadata, the first record sequence number, the first chain identification number and the first hash value;
   d) incrementing or decrementing the first record sequence number; and

   performing at least steps a)-c) for subsequent first metadata subsequently received at the first processing entity and associated with respective subsequent first log data.

2. The computer-implemented method of claim 1, wherein the hashing is performed using a first hash key associated with the first processing entity.

3. The computer-implemented method of claim 1 or 2, further comprising, at a second processing entity:

   e) receiving second metadata including second log data;
   f) hashing the second metadata, a second record sequence number and a second chain identification number associated with the second processing entity to produce a second hash value;
   g) sending, to the audit database, a second hashed metadata entry comprising: the second metadata, the second record sequence number, the second chain identification number and the second hash value;
   h) incrementing or decrementing the second record sequence number; and

   performing at least steps e)-g) for subsequent second metadata subsequently received at the second processing entity and associated with a respective subsequent second log data.

4. A computer-implemented method comprising:

   receiving, from each of a plurality of processing entities, a series of hashed metadata entries, each hashed metadata entry comprising:

   metadata comprising log data,
   a record sequence number associated with that metadata and the respective processing entity,
   a chain identification number for the respective processing entity, and
   a hash value associated with the respective: metadata, record sequence number, and chain identification number; and

   storing the hashed metadata entries in an audit database.

5. The computer-implemented method of any preceding claim, wherein each log data comprises one or both of:

   a log file; and
   a log file identifier and a location code for a log file identified by the log file identifier.

6. The computer-implemented method of claim 4 or 5, further comprising, for each hashed metadata entry received from one of the plurality of processing entities:

   hashing that hashed metadata entry's: metadata, record sequence number, and chain identification number to produce a verification hash value; and
   if the verification hash value is the same as that hashed metadata's hash value, determining that that hashed metadata entry should not be repudiated.

7. The computer-implemented method of claim 6, wherein hashing, for each hashed metadata entry received from one of the plurality of processing entities, the hashed metadata entry's metadata, record sequence number, and chain identification number to produce a verification hash value comprises performing a hash operation using a hash key associated with the respective processing entity.

8. The computer implemented method of any of claims 4 to 6 further comprising, for each series of hashed metadata entries received from one of the plurality of processing entities, determining that that series of hashed metadata entries is complete, optionally comprising doing so by:

   determining from the record sequence numbers of the hashed metadata of that series that each of those record sequence numbers spans an expected range of record sequence number values, and
   determining that, when the record sequence numbers of the hashed metadata of that series are sequentially ordered, the increment or decrement between each pair of adjacent record sequence numbers is the same as an expected increment or decrement.

9. The computer implemented method of claim 8 when dependent on claim 6 or 7, further comprising creating a unified and non-repudiated log by joining together at least the log data of all of the hashed metadata entries.

10. The computer-implemented method of any of claims 4 to 9, further comprising:

    the method of claim 1 or 2, wherein the first processing entity is one of the plurality of processing entities and part of the series of hashed metadata entries received from the first processing entity is sent at step c); and
    the method of claim 3, wherein the second processing entity is another one of the plurality of processing entities and another part of the series of hashed metadata entries received from the second processing entity is sent at step g).

11. A computer system comprising one or more processors arranged to:

    a) receive first metadata including first log data;
    b) hash the first metadata, a first record sequence number and a first chain identification number associated with the first processing entity to produce a first hash value;
    c) send, to an audit database, a first hashed metadata entry comprising: the first metadata, the first record sequence number, the first chain identification number and the first hash value;
d) increment or decrement the first record sequence number; and

perform at least steps a)-c) for subsequent first metadata subsequently received at the first processing entity and associated with respective subsequent first log data.

12. A computer system comprising one or more processors arranged to:

receive, from each of a plurality of processing entities, a series of hashed metadata entries, each hashed metadata entry comprising:

metadata comprising log data,
a record sequence number associated with that metadata and the respective processing entity,
a chain identification number for the respective processing entity, and
a hash value associated with the respective: metadata, record sequence number, and chain identification number; and

store the hashed metadata entries in an audit database.

13. The computer system of claim 12, wherein the one or more processors are further arranged to cause performance of the method of any of claims 5 to 9 as dependent on claim 4.

14. A computer system comprising the computer system of claim 11 and the computer system of claim 12 or 13.

15. A computer-readable medium storing instructions that, when executed by one or more processors of one or more computing devices, cause the one or more computing devices to perform the method of any of claims 1 to 10.

Log messages

Four load balanced
horizontal processes

102

Audit Service
Instance
104

Audit Service
Instance
104

Audit Service
Instance
104

Audit Service
Instance
104

Chains are tracked by
application name,
location, and key alias

106

Audit Database

Each instance has its own
ephemeral HMAC chain
that exists for the
duration of the process
lifetime

FIG. 1

Ephemeral Chain (per process)

$k \longrightarrow$ $M_1 + S_0 + C_{id}$

HMAC

$M_1 + S_0 + C_{id} + HMAC$

$k \longrightarrow$ $M_2 + S_1 + C_{id}$

HMAC

$M_2 + S_1 + C_{id} + HMAC$

$k \longrightarrow$ $M_3 + S_2 + C_{id}$

HMAC

$M_3 + S_2 + C_{id} + HMAC$

Audit DB

106

FIG. 2

FIG. 3

300

```
┌─────────────────────────────────────────────────────┐
│                                                       │
│        RECEIVE  METADATA INCLUDING LOG DATA           │
│                                                       │
└─────────────────────────────────────────────────────┘  S302
                          │
                          ▼
┌─────────────────────────────────────────────────────┐
│     HASH METADATA , RECORD SEQUENCE NO. AND CHAIN ID  │
│             NO. TO PRODUCE HMAC                        │
└─────────────────────────────────────────────────────┘  S304
                          │
                          ▼
┌─────────────────────────────────────────────────────┐
│   SEND TO AUDIT DB: METADATA , RECORD SEQUENCE NO.,   │
│             CHAIN ID NO.  AND HMAC                     │
└─────────────────────────────────────────────────────┘  S306
                          │
                          ▼
┌─────────────────────────────────────────────────────┐
│             INCREMENT RECORD SEQUENCE NO.             │
│                                                       │
└─────────────────────────────────────────────────────┘  S308
                          │
                          ▼
┌─────────────────────────────────────────────────────┐
│                                                       │
│         REPEAT AT LEAST STEPS S302 TO S306            │
│                                                       │
└─────────────────────────────────────────────────────┘  S310
```

406

**audit_log**

chain_id: uuid
correlation_id: uuid
message: json
hmac: varchar
created_timestamp: timestamp
last_validated_timestamp: timestamp
audit_log_id: uuid

**app_info**  402

app_name: varchar
location: varchar
created_timestamp: timestamp
modified_timestamp: timestamp
app_info_id: uuid

**chains**  404

app_info_id: uuid
instance_info: varchar
instance_id: uuid
hmac_key_alias: varchar
last_validated_timestamp: timestamp
created_timestamp: timestamp
modified_timestamp: timestamp
chain_id: uuid

400

FIG. 4

500

RECEIVE FROM MULTIPLE PROCESSING ENTITIES A
SERIES OF HASHED METADATA ENTRIES EACH
COMPRISING: METADATA, A RECORS SEQUENCE NO., A
CHAIN ID NO. AND AN HMAC

S502

STORE HASHED METADATA ENTRIES IN AUDIT DB

S504

FIG. 5

612

604

610

602

606

614

608

600

FIG. 6

Europäisches
Patentamt
European
Patent Office
Office européen
des brevets

# EUROPEAN SEARCH REPORT

**Application Number**

EP 24 16 4733

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2021/314163 A1 (FABJANSKI KRZYSZTOF [PL]) 7 October 2021 (2021-10-07) <br> * abstract * <br> * paragraphs [0002] - [0051] * <br> * paragraphs [0076] - [0129] * <br> * claims 1-21 * <br> * figures 1-8 * | 1-15 | INV. <br> G06F21/55 <br> G06F21/64 <br> G06Q20/38 |
| A | US 10 860 457 B1 (EVENSON ANDREW [US] ET AL) 8 December 2020 (2020-12-08) <br> * abstract * <br> * column 1, lines 1-36 * <br> * column 2, line 35 - column 9, line 16 * <br> * column 23, line 42 - column 28, line 51; claims 1-20 * <br> * figures 1-11 * | 1-15 | |
| A | US 5 978 475 A (SCHNEIER BRUCE [US] ET AL) 2 November 1999 (1999-11-02) <br> * abstract * <br> * column 3, lines 5-52 * <br> * column 4, line 10 - column 16, line 15 * <br> * claims 1-70 * <br> * figures 1A-8 * | 1-15 | TECHNICAL FIELDS SEARCHED (IPC) <br><br> G06F <br> G06Q <br> H04L <br> G07G |

The present search report has been drawn up for all claims

| Place of search | Date of completion of the search | Examiner |
|---|---|---|
| Munich | 6 September 2024 | Bichler, Marc |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 16 4733

This annex lists the patent family members relating to the patent documents cited in the above-mentioned European search report.
The members are as contained in the European Patent Office EDP file on
The European Patent Office is in no way liable for these particulars which are merely given for the purpose of information.

06-09-2024

| Patent document cited in search report | | Publication date | Patent family member(s) | | Publication date |
|---|---|---|---|---|---|
| US 2021314163 | A1 | 07-10-2021 | EP | 3797369 A1 | 31-03-2021 |
| | | | US | 2021314163 A1 | 07-10-2021 |
| | | | US | 2023327879 A1 | 12-10-2023 |
| | | | WO | 2019224118 A1 | 28-11-2019 |
| US 10860457 | B1 | 08-12-2020 | NONE | | |
| US 5978475 | A | 02-11-1999 | NONE | | |

EPO FORM P0459

For more details about this annex : see Official Journal of the European Patent Office, No. 12/82